(19) Europäisches Patentamt
European Patent Office
Office européen des brevets

(11) **EP 4 718 708 A1**

(12) **EUROPEAN PATENT APPLICATION**

(43) Date of publication:
**01.04.2026 Bulletin 2026/14**

(21) Application number: **24202975.9**

(22) Date of filing: **26.09.2024**

(51) International Patent Classification (IPC):
**H02P 6/08** (2016.01)   **H02P 29/66** (2016.01)

(52) Cooperative Patent Classification (CPC):
**H02P 29/662; H02P 6/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **HALL, Sebastian**
**413 17 Göteborg (SE)**

• **OTTOSSON, Jonas**
**311 79 Falkenberg (SE)**
• **HELLEMANN, Fabian**
**417 67 Göteborg (SE)**

(74) Representative: **Lavoix**
**62, rue de Bonnel**
**69448 Lyon Cedex 03 (FR)**

Remarks:
Amended claims in accordance with Rule 137(2) EPC.

(54) **METHOD FOR CONTROLLING A MOTOR, COMPUTER PROGRAM PRODUCT, COMPUTER READABLE MEDIUM, CONTROLLER AND A VEHICLE**

(57)     A method for controlling a motor comprising a stator and permanent magnets, the method comprising following steps: providing (S17) input data, calculating (S19) a calculated magnetic flux of the motor, the calculated magnetic flux being calculated based on an initial voltage and an actual current, currently applied to the motor, computing (S21) a new current reference based on the calculated magnetic flux and the input data, and applying (S23) a new voltage to the motor based on the new current reference so that the actual current applied to the motor reaches the new current reference.

FIG.2

## Description

### TECHNICAL FIELD

The disclosure relates generally to electric motor control. In particular aspects, the disclosure relates to method for controlling a motor, computer program product, computer readable medium, controller and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The torque delivered by a motor having permanent magnets depends on the magnetic flux of the motor. The magnetic flux of the motor depends on the current and voltage suppling the motor. The relation between the magnetic flux and the current and voltage supplying the motor is known and the torque is controlled by controlling the current and the voltage supplying the motor. However, the relation between the magnetic flux and the current and the voltage is known for a certain temperature of the permanent magnets. Thus, the warming up of the permanent magnets during the use of the motor generates an offset in the relation, which impairs accuracy of controlling.

### SUMMARY

According to a first aspect of the disclosure, a method for controlling a motor comprising a stator and a permanent magnets, the method comprising following steps :

- providing input data,
- calculating a calculated magnetic flux of the motor, the calculated magnetic flux being calculated based on an initial voltage and an actual current, currently applied to the motor,
- computing a new current reference based on the calculated magnetic flux and the input data, and
- applying a new voltage to the motor based on the new current reference so that the actual current applied to the motor reaches the new current reference.

The first aspect of the disclosure may seek to increase the accuracy of the control of the motor. A technical benefit may include improving the accuracy of the control by adapting the current and the voltage supplying the motor in function of the calculated magnetic flux of the motor.

Optionally in some examples, including in at least one preferred example, the input data comprises several sets of tables applicable to a respective theoretical temperature for the permanent magnets of the motor, each set of tables comprising :

- a table linking torques and rotation speeds of the motor to current references for the theoretical temperature, and
- a table linking theoretical magnetic fluxes of the motor to current references for the theoretical temperature

A technical benefit may include improving the accuracy of the control of the motor by taking into account relations between the torque and the current supplying the motor for different theoretical temperatures of the permanent magnets.

Optionally in some examples, including in at least one preferred example, the input data comprises an actual rotation speed of the motor and a requested torque for the motor. A technical benefit may include ensuring that the torque of the motor by more precisely corresponds to the requested torque.

Optionally in some examples, including in at least one preferred example, during the computing step:

- for each set of tables, one theoretical magnetic flux indicated in the set of tables as corresponding to the actual current is selected, and
- an interpolation factor is calculated depending on the selected theoretical magnetic fluxes and the calculated magnetic flux.
- the new current reference is obtained by interpolating the current references indicated in the sets of tables as corresponding to the actual rotation speed and the requested torque, with the interpolation factor.

A technical benefit may include improving the accuracy of the control of the motor with a limited amount of data.

Optionally in some examples, including in at least one preferred example, the computing step includes:

- choosing a first set of tables, among the sets of tables, for which the selected theoretical magnetic flux is lower than, and closest to, the calculated magnetic flux;
- choosing a second set of tables, among the sets of tables, for which the selected theoretical magnetic flux is higher and closest to the calculated magnetic flux; wherein the interpolation factor is calculated based on the selected theoretical magnetic fluxes of the first and second set of tables.

A technical benefit may include reducing the complexity of the calculation of the interpolation factor.

Optionally in some examples, including in at least one preferred example, the theoretical temperatures for which the sets of tables are applicable are interpolated with the interpolation factor to calculate an estimated temperature of the permanent magnets. A technical benefit may include obtaining a temperature estimate for the permanent magnets without relying on any temperature sensor.

Optionally in some examples, including in at least one preferred example, the computing step includes calculating a difference between a previous interpolation factor and the interpolation factor and factoring the interpolation factor so that the difference is reduced, if the difference exceeds a predetermined amount. A technical benefit may include obtaining a stable controlling of the motor.

Optionally in some examples, including in at least one preferred example, during the calculating step, the calculated magnetic flux of the motor is calculated with the following expression:

$$\psi d = (uq - R\, iq)/\acute{\omega}$$

where:

$\psi d$ is the calculated flux expressed in Weber, wherein the calculated flux is the direct flux of the stator,
$uq$ is the initial voltage expressed in Volt, wherein the initial voltage is the quadratic voltage of the stator,
$R$ is an electrical resistance of the stator expressed in Ohm,
$iq$ is the actual current expressed in Ampere, wherein the actual current is the quadratic current of the stator, and
$\acute{\omega}$ is the actual rotation speed expressed in radian per second.

A technical benefit may include improving accuracy of the calculation of the interpolation factor, by obtaining a calculated magnetic flux that is as much representative of the current state of the motor as possible.

Optionally in some examples, including in at least one preferred example, the computing step includes calculating a difference between the new current reference and the actual current and factoring the new current reference so that the difference is reduced, if the difference exceeds a predetermined amount. A technical benefit may include obtaining a stable controlling of the motor. According to a second aspect of the disclosure, a vehicle comprising a motor (15) having permanent magnets and a controller adapted to cause execution of a method as defined above. The second aspect of the disclosure may seek to increase the accuracy of the control of the motor. A technical benefit may include improving the accuracy of the control by adapting the current and the voltage supplying the motor in function of the calculated magnetic flux of the motor.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein controller, computer readable medium, and computer program product associated with the above discussed technical benefits.

## BRIEF DESCRIPTION OF THE DRAWINGS

Examples are described in more detail below with reference to the appended drawings.

FIG. 1 is a schematic view of a vehicle according to an embodiment of the invention.
FIG. 2 is a flowchart of an example of a method according to an embodiment of the invention.

## DETAILED DESCRIPTION

The detailed description set forth below provides information and examples of the disclosed technology with sufficient detail to enable those skilled in the art to practice the disclosure.

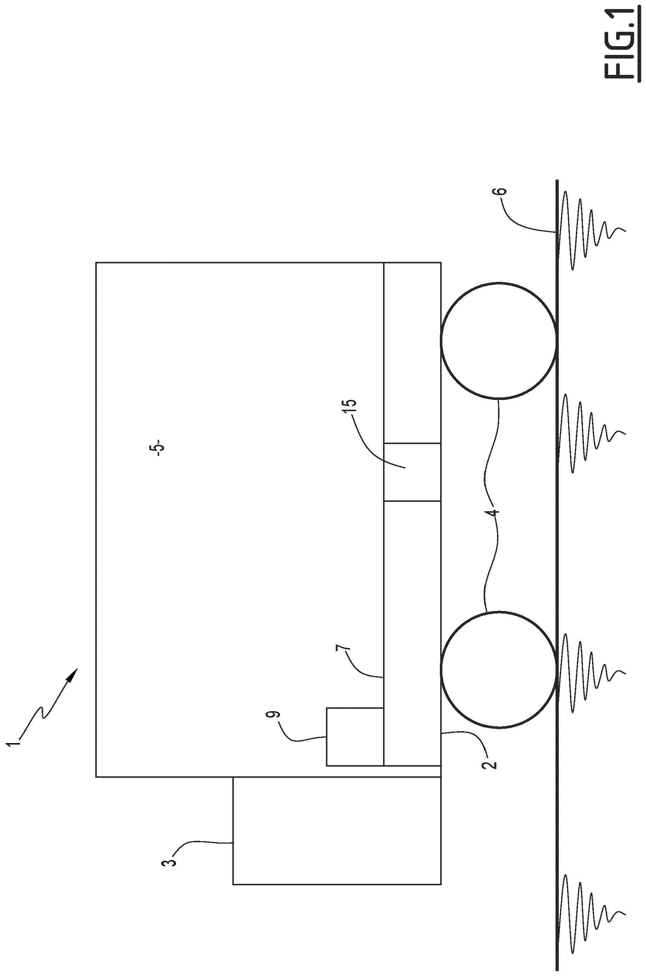

Figure 1 depicts a vehicle 1, comprising a frame 2, a driving cabin 3, wheels 4, a load compartment 5, a powertrain7 and a controller 9, according to an embodiment of the invention.

The driving cabin 3 is supported by the frame 2 and positioned at the front of the vehicle 1. The vehicle 1 is drivable by a driver. The driver inside the driving cabin 3 controls the vehicle 1.

The wheels 4 are mounted on the frame 2 and configured to rotate to enable the movement of the vehicle 1 on a road 6.

The powertrain7 comprises a motor 15. The motor 15 comprises a permanent magnets, not represented on the figures, a stator, also not represented on the figures, and an output shaft, also not represented on the figures. The permanent magnets belongs to a rotor of the motor 15. The output shaft rotates by rotation of the permanent magnets, when stator of the motor 15 is powered. The rotation of the output shaft rotates the wheels.

The powertrain 7 provides a propulsion force to the vehicle 1 to propel the vehicle 1. The propulsion force is the result of a mechanical transformation by the powertrain 7 of a torque provided by the motor 15 to the output shaft.

Thus, the propulsion force is limited by the torque provided by the motor 15.

The torque provided by the motor 15 depends on a magnetic flux of the motor 15 and the magnetic flux depends on a current and a voltage supplying the motor 15, more precisely the stator, called the actual current and the actual voltage.

The motor 15 is supplied with an alternating current. The physical quantities relating to the motor 15, such as the magnetic flux, the current and the voltage, have a direct component and a quadratic component. In the following application, the direct components are expressed with an index d and the quadratic components are expressed with an index q. The direct component and the quadratic component are considered in a rotary reference frame, fixed relative to the permanent magnets, i.e. to the rotor. The direct component is oriented radially relative to an axis of rotation of the rotor relative to the stator, the quadratic component is oriented radially relative to the axis of rotation and perpendicularly relative to the direct component. Since the motor 15 has a rotor with a permanent magnets, in use, the direct and quadratic components of the current and voltage applied to the stator are constant when the motor runs in a steady state, although the current and voltage are actually alternative in a reference frame fixed relative to the stator.

The torque of the motor 15 is controlled by the controller 9, controlling the actual current and the actual voltage applied to the stator of the motor.

Since the torque actually generated by the motor 15 depends on the temperature of the rotor, the controller 9 is configured to adapt the actual voltage applied to the stator in function of the temperature of the permanent magnets. The actual current depending on the actual voltage, the adaptation of the current voltage has a direct influence on the actual current applied to the stator. Thus, the controller 9 controls the actual current by controlling the actual voltage applied to the stator.

Advantageously, the controller 9 is adapted to carry out a method for controlling the motor 15. This method may be a computer-implemented method.

More generally, the controller 9 is preferably a computer or computing system, or similar electronic computing device adapted to manipulate and/or transform parameter represented as physical, such as electronic, quantities within the computing system's registers and/or memories into other parameter similarly represented as physical quantities within the computing system's memories, registers or other such information storage, transmission or display devices.

The controller 9 preferably comprises a processor. The processor comprises a processing unit, memories and a reader. The reader is adapted to read a computer readable medium.

The computer program product comprises a computer readable medium.

The computer readable medium is a medium that can be read by the reader of the processor. The computer readable medium is a medium suitable for storing electronic instructions, and capable of being coupled to a computer system bus.

Such computer readable storage medium is, for instance, a disk, a floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

A computer program is stored in the computer readable storage medium. The computer program comprises one or more stored sequence of program instructions.

The computer program is loadable into the processing unit and adapted to cause execution of the method to control the motor 15 when the computer program is run by the processing unit.

The controller 9 executes the method to control the motor 15 when the motor is in a steady state. In other words, the controller executes the method to control the motor 15 when an acceleration or a deceleration of the output shaft are constant or with very low variations.

The controller 9 is connected to a non-represented speed sensor of the vehicle 1, configured to measure a physical quantity that reflects an actual rotation speed of the output shaft.

Advantageously, the controller 9 comprises an interface on which the driver indicates the requested torque of the motor. For instance, the interface includes a pedal that the drivers presses to indicate the requested torque.

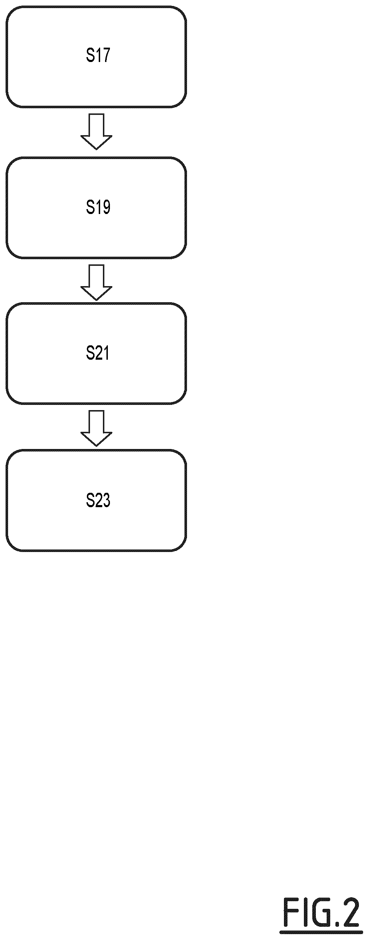

An example of operating of the controller 9 is now described in reference to figure 2, which is a flowchart of an example of a method for controlling the motor 15.

The method for controlling the motor aims at obtaining a requested torque, by adapting the actual current and the actual voltage supplying the motor 15.

According to the example of figure 2, the method for controlling the motor 15 comprises a providing step S17, a calculating step S19, a computing step S21 and an applying step S23. The method is implemented when the motor is running.

During the providing step S17, input data is provided.

Advantageously, the input data comprises several sets of tables. Each set of tables is applicable to a respective theoretical temperature for the permanent magnets of the motor 15.

Each set of tables comprises a table linking torques and rotation speeds of the motor 15 to current references for the theoretical temperature and a table linking theoretical magnetic fluxes of the stator of the motor 15 to current references for the theoretical temperature. In particular, the current references are the direct component and the quadratic component of the current to be applied to the stator. In particular, the theoretical fluxes are the direct component and the quadratic component of the magnetic fluxes of the stator. In other words, for a given temperature, the first table of the set gives the reference current as an output of the permanent magnets.

A second set of tables comprises a table linking torques or rotation speeds of the motor 15 to second current references for a second temperature of the permanent magnet of the motor 15 and a table linking second theoretical magnetic flux of the motor 15 to the second current references for the second temperature of the permanent magnets. The second temperature is different from the just above mentioned first temperature.

In other words, each set of tables links the torque and the rotation speed of the motor to the theoretical magnetic flux for a respective temperature.

Advantageously, the input data provided at step S17 comprises the actual rotation speed of the motor 15 and the requested torque of the motor 15. The actual rotation speed can be provided by the speed sensor.

When the motor 15 reaches the steady state, the motor 15 is supplied with the actual current, as the controller 9 controls the application of a corresponding actual voltage, called the initial voltage.

The input data comprises the actual current supplying the motor.

After the providing step S 17, the calculating step S19 is implemented. During the calculating step S 19, a calculated magnetic flux of the motor 15 is calculated.

The calculated magnetic flux corresponds to an estimation of the magnetic flux of the stator. This estimation does not rely on the aforementioned sets of tables, but is instead calculated. The calculated magnetic flux is, advantageously, calculated with the following expression:

$$\psi_d = (u_q - R\, i_q)/\acute{\omega}$$

where:

  $\psi_d$ is the calculated flux expressed in Weber, wherein the calculated flux is the direct flux of the stator, i.e. the direct component of the magnetic flux of the stator,
  $u_q$ is the initial voltage expressed in Volt, wherein the initial voltage is the quadratic voltage currently applied to the stator, i.e. the quadratic component of the voltage,
  R is the electrical resistance of the stator expressed in Ohm,
  $i_q$ is the actual current expressed in Ampere, wherein the actual current is the quadratic current of the stator, and
  $\acute{\omega}$ is the actual rotation speed of the motor expressed in radian per second.

After the calculating step S 19, the computing step S21 is implemented. During the computing step S21, a new current reference is computed. The new current reference is obtained by interpolating the sets of tables.

For each set of tables, the controller 19 selects a selected theoretical magnetic flux which is the theoretical magnetic flux indicated in the set of tables as corresponding to the actual current.

Each selected theoretical magnetic flux is compared with the calculated magnetic flux and an interpolation factor is calculated depending on the selected theoretical magnetic fluxes and the calculated magnetic flux. The interpolation factor enables to obtain the calculated magnetic flux with a combination of the selected theoretical magnetic fluxes factorized by the interpolation factor. Advantageously, a first set of tables is chosen among the sets of tables, the first set of tables being the set of tables for which the selected theoretical magnetic flux is lower than, and closest to, the calculated magnetic flux.

Advantageously, a second set of tables is chosen among the sets of tables, the second set of tables being the set of tables for which the selected theoretical magnetic flux is higher than, and closest to, the calculated magnetic flux. The interpolation factor is calculated based on the selected theoretical magnetic fluxes of the first and second set of tables.

Preferably, the interpolation factor verifies the following expression:

$$\psi_d = \psi_{dt1c}*X + (1\text{-}X)\,\psi_{dt2c}$$

where:

  $\psi_d$ is the calculated magnetic flux expressed in Weber,
  $\psi_{dt1c}$ is the selected theoretical magnetic flux of the first set of table expressed in Weber,
  $\psi_{dt2c}$ is the theoretical magnetic flux of the second set of tables expressed in Weber, and
  X is the interpolation factor.

Advantageously, the new current reference is obtained by interpolating the current references indicated in the sets of tables as corresponding to the actual rotation speed and the requested torque, with the interpolation factor.

For example, in the case where three sets of tables are considered, including a first set for a temperature of 20°C, a second set for a temperature of 60°C and a third set for a temperature of 120°C, the controller 19 selects, for each of the sets, the theoretical magnetic flux indicated to correspond to the actual current. The calculated magnetic flux is compared to the three selected theoretical magnetic fluxes. In case, the calculated magnetic flux is superior to the selected theoretical magnetic flux of the first set and inferior to the selected theoretical magnetic fluxes of the second and third sets, the interpolation is calculated between the selected theoretical magnetic fluxes of the first and second sets.

More precisely, the new current reference is the interpolation of the current reference of the first set of tables linked to the requested torque and rotation speed of the motor 15 and the current reference of the second set of tables linked to the requested torque and rotation speed of the motor 15.

In other words, the new current reference is computed with the following expression:

$$i_{qn} = i_{qt1t}*X + (1\text{-}X)\, i_{qt2t}$$

where:

$i_{qn}$ is the new current reference expressed in Ampere,

$i_{qt1c}$ is the current reference of the first set of tables linked with the requested torque and rotation speed of the motor 15 expressed in Ampere,

$i_{qt2c}$ is the current reference of the second set of tables linked with the requested torque and rotation speed of the motor 15 expressed in Ampere, and

X is the interpolation factor.

The new current reference corresponds to the current that should supply the motor 15 to have the requested torque with the actual rotation speed.

Advantageously, during the computing step S21, a difference between the new current reference and the actual current is calculated. The new current reference is factorized so that the difference is reduced, if the difference exceeds a predetermined amount. In other words, the new current reference is filtered by a low-pass filter.

Thanks to the filtration of the new current reference, if a miscalculation of the controller 19 leads to a wrong new current reference, the impact of the miscalculation of the controller 19 is reduced.

Advantageously, during the computing step S21, the estimated temperature of the permanent magnets is calculated. The theoretical temperatures for which the sets of tables are applicable are interpolated with the interpolation factor to calculate the estimated temperature In other words, the actual temperature is calculated with the following expression:

$$Tn = T1*X + (1\text{-}X)\, T2$$

where:

Tn is the actual temperature expressed in Kelvin ,
T1 is the temperature of the first set of tables expressed in Kelvin,
T2 the temperature of the second set of tables expressed in Kelvin, and
X is interpolation factor.

After the computing step S21, the applying step S23 is implemented. During the applying step S23, the controller 19 applies a new voltage to the motor 15 based on the new current reference so that the currently applied current reaches the new current reference. More precisely the controller 9 is a proportional-integral-derivative controller which adapts the initial voltage to the new voltage so that the actual current equals the new current reference.

The second applying step S23 is very fast, virtually instantaneous.

Once the steps S17, S19, S21 and S23 have been executed, the controller executes the steps of the method again in an iterative manner, to constantly adapt the current and the voltage supplying the motor 15 and thus reach the requested torque.

The steps of the method, including the computing step S21, are executed iteratively, so that at each iteration, a new interpolation factor is computed. Hence, each new interpolation factor calculated at a new iteration of step S21 succeeds a previous interpolation factor computed at a previous iteration of the computing step S21. During the computing step S21, a difference between the new interpolation factor and the previous interpolation factor, computed at the previous iteration of step S21, is calculated. The interpolation factor is factorized so that the difference is reduced, if the difference exceeds a predetermined amount. In other words, the interpolation factor is filtered by a low-pass filter.

Advantageously, the controller 9 is able to cause the execution of the method even if the sets of tables are not calibrated for the specific motor 15 equipped in the vehicle, but are calibrated to a generic motor of the same type, i.e. a motor with the same features overall than the specific motor 15, i.e. a motor controlled with the same electrical equations than the specific motor 15. The sets of tables may not calibrated for the motor 15 in that the relations expressed by the tables are true for the specific motor 15, but for an another temperature than the theoretical temperature for which the tables are applicable. Indeed, thanks to the interpolation, using sets of tables not calibrated is equivalent to using sets of tables for other temperatures. For instance, a table calibrates for 25°C for the generic motor equals to a table calibrates for 50°C for the specific motor 15. Thanks to the interpolation, the physical quantities used to control the specific motor 15 are independent from the temperature of the table. Thus with only two sets of tables the method can be executed regardless of the specific motor 15.

The adaptation of the current and the voltage supplying the motor 15 during its running by the controller 9, enables a better control of the motor 15 and reduces or avoids a torque offset compared to the requested torque that could be caused by the warming up of the permanent magnets.

Thus, the adaptation of the current and the voltage supplying the motor 15 during its running by the controller 9 increases the safety of the vehicle.

**Example 1:** A method for controlling a motor 15 having a permanent magnets, the method comprising following steps :

- providing S17 input data,
- calculating S19 a calculated magnetic flux of the motor, the calculated magnetic flux being calculated based on an initial voltage and an actual current, currently applied to the motor (15),
- computing S21 a new current reference based on the calculated magnetic flux and the input data, and
- applying S23 a new voltage the motor to the motor based on the new current reference so that the actual current applied to the motor reaches the new current reference.

**Example 2:** The method of example 1 where the input data comprises several sets of tables applicable to a respective theoretical temperature for the permanent magnets of the motor, each set of tables comprising :

- a table linking torques and rotation speeds of the motor to current references for the theoretical temperature, and
- a table linking theoretical magnetic flux of the motor to the current references for the theoretical temperature.

**Example 3:** The method of the preceding example, wherein the input data comprises an actual rotation speed of the motor and a requested torque for the motor.

**Example 4:** The method of the preceding example, wherein, during the computing step S21:

- for each set of tables, one theoretical magnetic flux indicated in the set of tables as corresponding to the actual current is selected, and
- an interpolation factor is calculated depending on the selected theoretical magnetic fluxes and the calculated magnetic flux.

**Example 5:** The method of the preceding example wherein, during the computing step S21, the new current reference is obtained by interpolating the current references indicated in the sets of tables as corresponding to the actual rotation speed and the requested torque, with the interpolation factor.

**Example 6:** The method of any one of the examples 4 and 5, wherein the computing step S21 includes:

- choosing a first set of tables, among the sets of tables, for which the selected theoretical magnetic flux is lower than, and closest to, the calculated magnetic flux;
- choosing a second set of tables, among the sets of tables, for which the selected theoretical magnetic flux is higher and closest to the calculated magnetic flux;

wherein the interpolation factor is calculated based on the selected theoretical magnetic fluxes of the first and second set of tables.

**Example 7:** The method of any one of the examples 4 to 6, wherein the computing step S21 includes calculating a difference between a previous interpolation factor and the interpolation factor and factoring the interpolation factor so that the difference is reduced, if the difference exceeds a predetermined amount.

**Example 8:** The method of any one of the examples 4 to 7, wherein the theoretical temperatures for which the sets of tables are applicable are interpolated with the interpolation factor to calculate an estimated temperature of the permanent magnets.

**Example 9:** The method of any one of the examples 3 to 8, wherein, during the calculating step S19 the calculated magnetic flux of the motor is calculated with the following expression:

$$\psi d = (uq - R\ iq)/\dot{\omega}$$

where:

$\psi d$ is the calculated flux expressed in Weber, wherein the calculated flux is the direct flux of the stator,
uq is the initial voltage expressed in Volt, wherein the initial voltage is the quadratic voltage of the stator
R is the electrical resistance of the stator expressed in Ohm,
iq is the actual current expressed in Ampere, wherein the actual current is the quadratic current of the stator and
$\dot{\omega}$ is the actual rotation speed expressed in radian per second.

**Example 10:** The method of any one of the preceding examples wherein the computing step S21 includes calculating a difference between the new current reference and the actual current and factoring the new current reference so that the difference is reduced, if the difference exceeds a predetermined amount **Example 11:** A computer program product comprising a computer readable medium, having thereon a computer program comprising program instructions, the computer program being loadable into a -processing unit and adapted to cause execution of a method of any one of the examples 1 to 10 when the computer program is run by the -processing unit.

**Example 12:** A computer readable medium having encoded thereon a computer program of the example 11.

**Example 13:** A controller 9 comprising a computer readable medium of the preceding example having encoded thereon a computer program comprising program instructions, the computer program being loadable into a -processing unit and, when the computer program is run by the parameter processing unit, the computer program being adapted to cause execution of a method of any one of the examples 1 to 10.

**Example 14:** A vehicle 1 comprising a motor 15 having a permanent magnets and a controller 9 of the example 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A method for controlling a motor (15) comprising a stator and permanent magnets, the method comprising following steps :

   - providing (S17) input data,
   - calculating (S19) a calculated magnetic flux of the motor, the calculated magnetic flux being calculated based on an initial voltage and an actual current, currently applied to the motor (15),
   - computing (S21) a new current reference based on the calculated magnetic flux and the input data, and
   - applying (S23) a new voltage to the motor based on the new current reference so that the actual current applied to the motor reaches the new current reference.

2. The method according to claim 1, wherein the input data comprises several sets of tables applicable to a respective theoretical temperature for the permanent magnets of the motor, each set of tables comprising :

   - a table linking torques and rotation speeds of the motor to current references for the theoretical temperature, and
   - a table linking theoretical magnetic fluxes of the motor to current references for the theoretical temperature.

3. The method according to claim 2 wherein the input data comprises an actual rotation speed of the motor and a requested torque for the motor.

4. The method according to claim 3, wherein, during the computing step (S21):

   - for each set of tables, one theoretical magnetic flux indicated in the set of tables as corresponding to the actual current is selected, and
   - an interpolation factor is calculated depending on the selected theoretical magnetic fluxes and the calculated magnetic flux.

5. The method according to claim 4, wherein, during the computing step (S21), the new current reference is obtained by interpolating the current references indicated in the sets of tables as corresponding to the actual rotation speed and the requested torque, with the interpolation factor.

6. The method according to any one of claims 4 or 5, wherein the computing step (S21) includes:

    - choosing a first set of tables, among the sets of tables, for which the selected theoretical magnetic flux is lower than, and closest to, the calculated magnetic flux;
    - choosing a second set of tables, among the sets of tables, for which the selected theoretical magnetic flux is higher and closest to the calculated magnetic flux; wherein the interpolation factor is calculated based on the selected theoretical magnetic fluxes of the first and second set of tables.

7. The method according to any one of the claims 4 to 6, wherein the computing step (S21) includes calculating a difference between a previous interpolation factor and the interpolation factor and factoring the interpolation factor so that the difference is reduced, if the difference exceeds a predetermined amount.

8. The method according to any one of the claims 4 to 7, wherein the theoretical temperatures for which the sets of tables are applicable are interpolated with the interpolation factor to calculate an estimated temperature of the permanent magnets.

9. The method according to any one of claims 3 to 8, wherein, during the calculating step (S19), the calculated magnetic flux of the motor is calculated with the following expression:

$$\psi d = (uq - R\ iq)/\dot\omega$$

where:

    $\psi d$ is the calculated flux expressed in Weber, wherein the calculated flux is the direct flux of the stator,
    uq is the initial voltage expressed in Volt, wherein the initial voltage is the quadratic voltage of the stator,
    R is an electrical resistance of the stator expressed in Ohm,
    iq is the actual current expressed in Ampere, wherein the actual current is the quadratic current of the stator, and
    $\dot\omega$ is the actual rotation speed expressed in radian per second.

10. The method according to any one of the preceding claims, wherein the computing step (S21) includes calculating a difference between the new current reference and the actual current and factoring the new current reference so that the difference is reduced, if the difference exceeds a predetermined amount.

11. A computer program product comprising a computer readable medium, having thereon a computer program comprising program instructions, the computer program being loadable into a processing unit and adapted to cause execution of a method according to any one of the claims 1 to 10 when the computer program is run by the -processing unit.

12. A computer readable medium having encoded thereon a computer program according to claim 11.

13. A controller (9) comprising a computer readable medium according to the previous claim having encoded thereon a computer program comprising program instructions, the computer program being loadable into a -processing unit and, when the computer program is run by the parameter processing unit, the computer program being adapted to cause execution of a method according to any one of the claims 1 to 10.

14. A vehicle (1) comprising a motor (15) having permanent magnets and a controller (9) according to claim 13.

**Amended claims in accordance with Rule 137(2) EPC.**

1. A method for controlling a motor (15) comprising a stator and permanent magnets, the method comprising following steps :

    - providing (S17) input data,
    - calculating (S19) a calculated magnetic flux of the motor, the calculated magnetic flux being calculated based on an initial voltage and an actual current, currently applied to the motor (15),
    - computing (S21) a new current reference based on the calculated magnetic flux and the input data, and
    - applying (S23) a new voltage to the motor based on the new current reference so that the actual current applied to the motor reaches the new current reference,

    the method being **characterized in that** the input data comprises several sets of tables applicable to a respective theoretical temperature for the permanent magnets of the motor, each set of tables comprising :

- a table linking torques and rotation speeds of the motor to current references for the theoretical temperature, and
- a table linking theoretical magnetic fluxes of the motor to current references for the theoretical temperature.

2. The method according to claim 1 wherein the input data comprises an actual rotation speed of the motor and a requested torque for the motor.

3. The method according to claim 2, wherein, during the computing step (S21):

- for each set of tables, one theoretical magnetic flux indicated in the set of tables as corresponding to the actual current is selected, and
- an interpolation factor is calculated depending on the selected theoretical magnetic fluxes and the calculated magnetic flux.

4. The method according to claim 3, wherein, during the computing step (S21), the new current reference is obtained by interpolating the current references indicated in the sets of tables as corresponding to the actual rotation speed and the requested torque, with the interpolation factor.

5. The method according to any one of claims 3 or 4, wherein the computing step (S21) includes:

- choosing a first set of tables, among the sets of tables, for which the selected theoretical magnetic flux is lower than, and closest to, the calculated magnetic flux;
- choosing a second set of tables, among the sets of tables, for which the selected theoretical magnetic flux is higher and closest to the calculated magnetic flux; wherein the interpolation factor is calculated based on the selected theoretical magnetic fluxes of the first and second set of tables.

6. The method according to any one of the claims 3 to 5, wherein the computing step (S21) includes calculating a difference between a previous interpolation factor and the interpolation factor and factoring the interpolation factor so that the difference is reduced, if the difference exceeds a predetermined amount.

7. The method according to any one of the claims 3 to 6, wherein the theoretical temperatures for which the sets of tables are applicable are interpolated with the interpolation factor to calculate an estimated temperature of the permanent magnets.

8. The method according to any one of claims 2 to 7, wherein, during the calculating step (S19), the calculated magnetic flux of the motor is calculated with the following expression:

$$\psi d = (uq - R\ iq)/\acute\omega$$

where:

$\psi d$ is the calculated flux expressed in Weber, wherein the calculated flux is the direct flux of the stator,
uq is the initial voltage expressed in Volt, wherein the initial voltage is the quadratic voltage of the stator,
R is an electrical resistance of the stator expressed in Ohm,
iq is the actual current expressed in Ampere, wherein the actual current is the quadratic current of the stator, and
$\acute\omega$ is the actual rotation speed expressed in radian per second.

9. The method according to any one of the preceding claims, wherein the computing step (S21) includes calculating a difference between the new current reference and the actual current and factoring the new current reference so that the difference is reduced, if the difference exceeds a predetermined amount.

10. A computer program product comprising a computer readable medium, having thereon a computer program comprising program instructions, the computer program being loadable into a processing unit and adapted to cause execution of a method according to any one of the claims 1 to 9 when the computer program is run by the -processing unit.

11. A computer readable medium having encoded thereon a computer program according to claim 10.

12. A controller (9) comprising a computer readable medium according to the previous claim having encoded thereon a computer program comprising program instructions, the computer program being loadable into a -processing unit and, when the computer program is run by the parameter processing unit, the computer program being adapted to cause execution of a method according to any one of the claims 1 to 9.

13. A vehicle (1) comprising a motor (15) having permanent magnets and a controller (9) according to claim 12.

EP 4 718 708 A1

FIG.1

```
┌─────────────────────────┐
│                         │
│          S17            │
│                         │
└─────────────────────────┘
            ⇩
┌─────────────────────────┐
│                         │
│          S19            │
│                         │
└─────────────────────────┘
            ⇩
┌─────────────────────────┐
│                         │
│          S21            │
│                         │
└─────────────────────────┘
            ⇩
┌─────────────────────────┐
│                         │
│          S23            │
│                         │
└─────────────────────────┘
```

FIG.2

Europäisches
Patentamt

European
Patent Office

Office européen
des brevets

# EUROPEAN SEARCH REPORT

**Application Number**

EP 24 20 2975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM SANG MIN ET AL: "Rotor Magnet Temperature Estimation Using Magnet Flux and Energy Information", 2023 11TH INTERNATIONAL CONFERENCE ON POWER ELECTRONICS AND ECCE ASIA (ICPE 2023 - ECCE ASIA), THE KOREAN INSTITUTE OF POWER ELECTRONICS, 22 May 2023 (2023-05-22), pages 2374-2379, XP034403501, DOI: 10.23919/ICPE2023-ECCEASIA54778.2023.10213502 [retrieved on 2023-08-22] | 1-5,7-14 | INV. H02P6/08 H02P29/66 |
| A | * the whole document * | 6 | |
| | ----- | | |
| X | US 2020/313586 A1 (GOPALAKRISHNAN SURESH [US] ET AL) 1 October 2020 (2020-10-01) | 1-5,7-14 | |
| A | * the whole document * | 6 | |
| | ----- | | |
| X | CHO SU-YEON ET AL: "A Torque Compensation Control Scheme of PMSM Considering Wide Variation of Permanent Magnet Temperature", IEEE TRANSACTIONS ON MAGNETICS, IEEE, USA, vol. 55, no. 2, 1 February 2019 (2019-02-01), pages 1-5, XP011706038, ISSN: 0018-9464, DOI: 10.1109/TMAG.2018.2864649 [retrieved on 2019-01-18] | 1-5,7-14 | |
| A | * the whole document * | 6 | |
| | ----- | | |
| | -/-- | | |

**TECHNICAL FIELDS SEARCHED (IPC)**

H02P

The present search report has been drawn up for all claims

| Place of search | Date of completion of the search | Examiner |
|---|---|---|
| Munich | 13 February 2025 | Fraïssé, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

page 1 of 2

| | Europäisches Patentamt European Patent Office Office européen des brevets | **EUROPEAN SEARCH REPORT** | **Application Number** EP 24 20 2975 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YOUN JIMIN ET AL: "Thermal Characteristic Modeling and Compensation for the Improvement of Actuator Homeostasis", IEEE/ASME TRANSACTIONS ON MECHATRONICS, IEEE SERVICE CENTER, PISCATAWAY, NJ, US, vol. 29, no. 4, 1 August 2024 (2024-08-01), pages 3019-3027, XP011979601, ISSN: 1083-4435, DOI: 10.1109/TMECH.2024.3400214 [retrieved on 2024-05-30] * the whole document * | 1-14 | |
| A | JP 5 420006 B2 (MITSUBISHI ELECTRIC CORP) 19 February 2014 (2014-02-19) * the whole document * | 1-14 | |
| A | US 10 295 599 B2 (GM GLOBAL TECH OPERATIONS LLC [US]) 21 May 2019 (2019-05-21) * the whole document * | 1-14 | |
| | | | TECHNICAL FIELDS SEARCHED (IPC) |

The present search report has been drawn up for all claims

| Place of search | Date of completion of the search | Examiner |
|---|---|---|
| Munich | 13 February 2025 | Fraïssé, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2975

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | Publication date |
|---|---|---|---|
| US 2020313586 A1 | 01-10-2020 | CN 111756295 A<br>DE 102020103499 A1<br>US 2020313586 A1 | 09-10-2020<br>01-10-2020<br>01-10-2020 |
| JP 5420006 B2 | 19-02-2014 | CN 103326654 A<br>DE 102012221757 A1<br>JP 5420006 B2<br>JP 2013198340 A<br>US 2013249448 A1 | 25-09-2013<br>26-09-2013<br>19-02-2014<br>30-09-2013<br>26-09-2013 |
| US 10295599 B2 | 21-05-2019 | CN 109391198 A<br>DE 102018119453 A1<br>US 2019049517 A1 | 26-02-2019<br>14-02-2019<br>14-02-2019 |

EPO FORM P0459

For more details about this annex : see Official Journal of the European Patent Office, No. 12/82